(19) Europäisches Patentamt
European Patent Office
Office européen des brevets

(11) EP 3 002 054 A1

(12) EUROPEAN PATENT APPLICATION

(43) Date of publication:
06.04.2016 Bulletin 2016/14

(21) Application number: 15192187.1

(22) Date of filing: 04.12.2012

(51) Int Cl.:
B01D 71/36 (2006.01)    B01D 63/08 (2006.01)
B01D 69/10 (2006.01)    B01D 69/12 (2006.01)
C08J 9/00 (2006.01)    B01D 67/00 (2006.01)
B29K 27/18 (2006.01)    B29C 55/02 (2006.01)
B29D 99/00 (2010.01)    B29C 39/02 (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 05.12.2011 JP 2011265669

(62) Document number(s) of the earlier application(s) in
accordance with Art. 76 EPC:
12854809.6 / 2 789 380

(71) Applicant: Sumitomo Electric Fine Polymer, Inc.
Sennan-gun,
Osaka 590-0458 (JP)

(72) Inventors:
• HAYASHI, Fumihiro
Sennan-gun, Osaka 590-0458 (JP)

• OYA, Aya
Sennan-gun, Osaka 590-0458 (JP)
• UNO, Atsushi
Sennan-gun, Osaka 590-0458 (JP)

(74) Representative: Boult Wade Tennant
Verulam Gardens
70 Gray's Inn Road
London WC1X 8BT (GB)

Remarks:
This application was filed on 29-10-2015 as a
divisional application to the application mentioned
under INID code 62.

(54) **POROUS POLYTETRAFLUOROETHYLENE RESIN FILM, POROUS POLYTETRAFLUOROETHYLENE RESIN FILM COMPOSITE, AND SEPARATION MEMBRANE ELEMENT**

(57) The invention offers a porous polytetrafluoroethylene membrane, which is a porous resin membrane produced by the following steps: preparing multiple types of polytetrafluoroethylene each having a different quantity of heat of fusion; using each of the multiple types of polytetrafluoroethylene to form a membrane composed of a fluororesin consisting mainly of polytetrafluoroethylene; heating each membrane to its melting point or above to bake it, so that multiple types of nonporous resin membranes are produced; stacking the multiple types of nonporous resin membranes in the order of the magnitude of the quantity of heat of fusion of the polytetrafluoroethylene used to produce each of the nonporous resin membranes; bonding the stacked membranes with each other; and stretching the bonded membranes to form the porous resin membrane. The porous polytetrafluoroethylene membrane has a mean flow pore diameter of 50 nm or less. It has through pores having a microscopic and uniform diameter, and when used as a filter, it has excellent efficiency in filtering treatment and is less likely to develop clogging. The invention also offers a composite of the membrane, a process of producing the composite, and a separation membrane element incorporating the composite as a filtering membrane.

**FIG. 1**

(a)

} 11
12
×10000

(b)

} 11
×30000

EP 3 002 054 A1

## Description

Technical Field

The present invention relates to a porous polytetrafluoroethylene membrane made of fluororesin consisting mainly of polytetrafluoroethylene (hereinafter referred to as PTFE) and a porous-PTFE-membrane composite that is a porous composite incorporating the foregoing porous membrane as a constituting element and that is used as a filter for filtering microscopic particles. The present invention also relates to a separation membrane element incorporating the foregoing porous-PTFE-membrane composite as a filter.

Background Art

A porous resin membrane having not only through pores that is microscopic and uniform in pore diameter but also high porosity can be produced by stretching a membrane made of fluororesin consisting mainly of PTFE. Consisting mainly of PTFE, the resin membrane has excellent chemical and heat resistance. Consequently, the porous PTFE membrane is used as a filtering membrane (a filter) for filtering microscopic particles, particularly as a microscopic filtering membrane having a microscopic pore diameter of 50 nm or less.

The foregoing filtering membrane is required to have through pores that is microscopic and uniform in pore diameter. In addition, to achieve superior efficiency in filtering treatment (filtering property and treating rate), it is desired that the filtering membrane be thin, have high porosity (percentage of the total volume of the through pores), have excellent mechanical strength, and be free from defects such as microvoids and cracks.

Patent Literature 1 has disclosed a fluororesin membrane as a membrane (which is nonporous) made of fluororesin such as PTFE and free from defects such as microvoids and cracks. The fluororesin membrane is produced through the following process. First, a fluororesin dispersion produced by dispersing a fluororesin powder in a dispersion medium is applied onto a smooth film. Then, the dispersion medium is evaporated, and the fluororesin is baked. The fluororesin membrane is either a fluororesin membrane formed such that the foregoing smooth film can be removed or a fluororesin membrane formed by removing the foregoing smooth film. The fluororesin membrane has a thickness of 20 $\mu$m or less and a Gurley second of 300 seconds or more after the foregoing smooth film is removed. Literature 1 has further disclosed the following aspects. The stretching of a fluororesin composite formed by combining the foregoing fluororesin membrane with a porous base material can produce a porous-fluororesin-membrane composite that has a porous fluororesin membrane on a porous base material. The porous-fluororesin-membrane composite not only has a microscopic and uniform pore diameter but also is free from defects such as microvoids and cracks and excellent in mechanical strength and other properties. When the composite is used as a filter, superior efficiency in filtering treatment (filtering property and treating rate) can be achieved.

Citation List

Patent Literature

Patent Literature 1: the published Japanese patent application Tokukaihei 5-40425.

Summary of Invention

Technical Problem

Despite the above description, when such a porous-fluororesin-membrane composite having a microscopic pore diameter of 50 nm or less is used as a filter for performing filtration, because microscopic particles in a treatment-undergoing liquid (liquid to be filtration-treated) practically include microscopic particles of various sizes, deposition is created. As a result, the microscopic particles develop clogging in pores of the porous fluororesin membrane forming the composite, causing a problem of decreasing the treating rate comparatively rapidly. Consequently, as a filter that is less likely to develop the above-described clogging, a porous-fluororesin-membrane composite having, for example, a pore-diameter gradient in such a way that the pore diameter decreases from the upstream side toward the downstream side is desired to be developed.

An object of the present invention is to offer a porous-PTFE-membrane composite that is a porous-resin-membrane composite having, as a constituting element, a fluororesin membrane consisting mainly of PTFE, which is excellent in chemical resistance, heat resistance, and mechanical strength. In particular, the composite to be offered has through pores having a microscopic and uniform diameter of 50 nm or less, can achieve superior efficiency in filtering treatment, and is less likely to develop clogging when used as a filter. Another object of the present invention is to offer a porous PTFE membrane forming the above-described composite and a process of producing the composite.

In addition, to achieve a high treating rate in filtration, a filter is required to have high porosity. However, it has been difficult for the conventional porous PTFE membrane produced by stretching a PTFE membrane to achieve high porosity when its microscopic pore has a small diameter. More specifically, when a porous PTFE membrane is produced by stretching a PTFE membrane, the porosity and pore diameter can be controlled by the condition (time) of annealing performed before the stretching, the molecular weight of the PTFE, the degree of stretching, and other factors. However, in the case of the above-described controlling, when the porosity is increased, the pore diameter tends to be increased. Consequently, it has been difficult to produce a porous resin membrane (a filter) combining a smaller pore diameter and high porosity.

Yet another object of the present invention is to offer a process of producing a porous-PTFE-membrane composite. The process is a process of stretching a fluororesin membrane consisting mainly of PTFE and can produce a porous PTFE membrane having a higher porosity even when the pore diameter is the same as that of the conventional porous PTFE membrane.

Solution to Problem

To solve the above-described problem, the present inventor has intensely studied and, as a result, has found the following process. Multiple types of PTFE each having a different quantity of heat of fusion are prepared. Each of the multiple types of PTFE is used to form a membrane composed of a fluororesin consisting mainly of the PTFE. Each of the membranes is heated to its melting point or above to bake it to produce a nonporous resin membrane. The produced multiple types of nonporous resin membranes are stacked in the order of the magnitude of the quantity of heat of fusion of the PTFE used to produce each of the nonporous resin membranes. Finally, the stacked membranes are bonded to each other and stretched. This process can produce a porous PTFE membrane having different pore diameters in the direction of the thickness of it. The present inventor has also found that by employing a process in which a plurality of nonporous baked PTFE membranes having different magnitudes of quantity of heat of fusion are stacked on top of each other in layers to be stretched for becoming porous, the difference in pore diameter between the neighboring layers is decreased. As a result, a porous resin membrane can be produced that has a gradual distribution in the dimension of the pore diameter in the direction of the thickness even when the membrane has a pore diameter as microscopic as 50 nm or less and is thin. The present inventor has further found that by using, as a filter for filtering microscopic particles, a porous PTFE membrane having different pore diameters in the direction of the thickness of it and by placing the side having a larger pore diameter at the upstream side, the clogging caused by relatively large particles in the treatment-undergoing liquid can be suppressed.

The present inventor has further found that by producing a porous-PTFE-membrane composite by bonding the above-described porous PTFE membrane with a porous supporter, a filter can be obtained that has a superior treating rate, that is less likely to create clogging, and that has an excellent mechanical strength. The present inventor has further found that the foregoing production process enables the production of a porous PTFE membrane having high porosity in spite of having a microscopic pore diameter. In other words, the earlier-described object is accomplished by the invention composed of the following claims.

The invention stated in claim 1 is a porous PTFE membrane. The membrane is a porous resin membrane produced by the following steps:

> preparing multiple types of PTFE each having a different quantity of heat of fusion;
> using each of the multiple types of PTFE to form a membrane composed of a fluororesin consisting mainly of PTFE;
> heating each membrane to its melting point or above to bake it, so that multiple types of nonporous resin membranes are produced;
> stacking the multiple types of nonporous resin membranes in the order of the magnitude of the quantity of heat of fusion of the PTFE used to produce each of the nonporous resin membranes;
> bonding the stacked membranes with each other; and
> stretching the bonded membranes to form the porous resin membrane.

The porous PTFE membrane has a mean flow pore diameter of 50 nm or less.

In the above description, the term "a fluororesin consisting mainly of PTFE" means a fluororesin containing at least 50 mass% PTFE, desirably at least 80 mass% PTFE, although it may contain fluororesins other than PTFE. To produce the porous PTFE membrane of the present invention, first, a thin membrane made of fluororesin consisting mainly of the foregoing PTFE is produced (membrane production). The membrane production may be performed by using a powder of fluororesin to form the shape of a membrane.

After being formed in the shape of a membrane, the fluororesin is heated to its melting point or above. The heating bakes the powder of fluororesin and melts it to produce a nonporous fluororesin membrane. The term "a nonporous fluororesin membrane" means a membrane having almost no pores passing through the membrane. More specifically, it is desirable that the membrane have a Gurley second of 5,000 seconds or more.

When the porous PTFE membrane of the present invention is produced, at least two types of PTFEs each having a different quantity of heat of fusion are used. The above-described operation is performed on the individual PTFEs to produce at least two types of nonporous fluororesin membranes. The quantity of heat of fusion is obtained as the value measured by using a differential scanning calorimeter.

When the porous PTFE membrane of the present invention is produced, the multiple types of nonporous fluororesin membranes obtained through the above-described operation are stacked in the order of the magnitude of the quantity of heat of fusion of the PTFE used to produce each of the membranes and are bonded to each other. This bonding produces a multilayered nonporous fluororesin membrane in which the quantity of heat of fusion of the PTFE increases or decreases in the direction of the thickness, from one side of the membrane toward the other side.

The multilayered nonporous fluororesin membrane obtained through the above operation is stretched to make it porous. Although, the stretching may be performed by either uniaxial stretching or biaxial stretching, it is desirable to perform biaxial stretching. The stretching forms pores in the fluororesin membrane. As the degree of stretching is increased, the pore diameter is increased and consequently the mean flow pore diameter, which expresses the dimension of the pore diameter, is increased. The stretching is performed to the degree at which the desired mean flow pore diameter is achieved. Because the porous PTFE membrane of the present invention has a mean flow pore diameter of 50 nm or less, the stretching is performed such that the pore diameter does not exceed that range.

Before performing the stretching, it is desirable to perform annealing either through the process of increasing the temperature to the melting point of the PTFE or above and then gradually cooling it to the crystalline melting point or below or through the process of heating it for a certain time period at a temperature slightly lower than the melting point of the PTFE. The annealing can saturate the crystallinity of the fluororesin before the stretching. As a result, high porosity can be achieved and the production becomes possible at a higher reproducibility in pore diameter. The annealing can be performed through a process similar to that described in the published Japanese patent application Tokukai 2007-077323. The degree of progress of annealing can be confirmed by measuring the quantity of heat of fusion.

The diameter of the pores formed by the above-described stretching varies with the quantity of heat of fusion of PTFE. More specifically, as the quantity of heat of fusion of PTFE increases, the diameter of the formed pores increases. The nonporous fluororesin membrane to be stretched is formed by stacking layers such that the quantity of heat of fusion increases or decreases in the direction of the thickness, from one side of the membrane toward the other side. Consequently, the pore diameter after the stretching increases or decreases in the direction of the thickness, from one side of the membrane toward the other side. In addition, in the vicinity of the interface between the mutually bonded two layers, a pore-diameter transition layer is formed. As a result, in the vicinity of the interface, no great difference in pore diameter is created. Consequently, the variation in pore diameter in the direction of the thickness becomes continuous and gradual.

The porous PTFE membrane produced through the above operation has a feature in that the pore diameter continuously increases or decreases in the direction of the thickness, from one side of the membrane toward the other side and the mean flow pore diameter is 50 nm or less. As a result, it can be used as a filter for filtering microscopic particles. When the porous resin membrane is used as a filter, by placing the side having a larger pore diameter at the upstream side, the clogging can be suppressed. Furthermore, because the porous PTFE membrane has larger pores than that of the conventional porous PTFE membrane, it has a higher porosity than that of the conventional one when the mean flow pore diameter is the same.

The Gurley second varies with the porosity, thickness, and pore diameter, and as the porosity increases, the Gurley second decreases. As described above, the porous PTFE membrane stated in claim 1 can have a higher porosity than that of the conventional one even when the mean flow pore diameter is the same. Consequently, even when the membrane stated in claim 1 has a mean flow pore diameter of 50 nm or less, it can have a high porosity corresponding to 70 seconds or less in Gurley second.

The invention stated in claim 2 is the porous PTFE membrane as defined by claim 1, wherein the multiple types of PTFE have a difference of 10 J/g or more in quantity of heat of fusion between them. As the difference in quantity of heat of fusion between the multiple types of PTFE is increased, the difference in pore diameter in the direction of thickness of the porous PTFE membrane can be increased. As a result, when the membrane is used as a filter, the effect of suppressing the clogging can be increased. In addition, even when the membrane has the same mean flow pore diameter as that of another membrane, a higher porosity can be achieved. For this reason, it is desirable that the multiple types of PTFE have a difference of 10 J/g or more in quantity of heat of fusion between them.

The invention stated in claim 3 is a porous-PTFE-membrane composite that has:

(a) the porous PTFE membrane as defined by claim 1 or 2; and
(b) a porous supporter, which is bonded with the porous PTFE membrane.

The porous PTFE membrane of the present invention has microscopic pores uniform in diameter, has few defects such as voids, and has high porosity. Consequently, when it is used as a filter, it exhibits excellent features such as achieving a high treating rate and being less likely to develop clogging. Furthermore, by bonding it with a porous supporter, a porous-PTFE-membrane composite having excellent mechanical strength in addition to the foregoing excellent features can be produced. In addition, in comparison with the case where the porous PTFE membrane is used singly, the porous-PTFE-membrane composite is easy to handle when it is used or processed. Consequently, the porous-PTFE-membrane composite of the present invention can be advantageously used as a filter for filtering microscopic particles.

The porous-PTFE-membrane composite of the present invention can be obtained through the following process. First, a multilayered nonporous PTFE membrane is produced during the course of the process of producing the porous PTFE membrane stated in claim 1 or 2 through the following process. Multiple types of PTFE each having a different quantity of heat of fusion are prepared. Each of the multiple types of PTFE is used to form a membrane composed of a fluororesin consisting mainly of the PTFE. Each of the membranes is heated to its melting point or above to bake it, so that multiple types of nonporous resin membranes are produced. The multiple types of nonporous resin membranes are stacked in the order of the magnitude of the quantity of heat of fusion of the PTFE used to produce each of the nonporous resin membranes. The stacked membranes are bonded to each other. The multilayered nonporous PTFE membrane produced through the above-described process is bonded with a porous supporter to produce a nonporous-resin-membrane composite. The nonporous-resin-membrane composite is stretched to obtain the porous-PTFE-membrane composite. This stretching operation also stretches the multilayered nonporous PTFE membrane forming the nonporous-resin-membrane composite, so that a porous PTFE membrane is formed. In comparison with the case where the multilayered nonporous PTFE membrane is stretched without combining with the porous supporter, the above-described stretching is far easier to handle. In other words, whereas a thin resin membrane alone is difficult to handle at the time of stretching, the forming of a composite by combining with the porous supporter renders the handling easy.

The porous supporter gives mechanical strength to the composite of the present invention. When the composite is used as a filter, it is desired that the supporter do not impair the performance as the filter, such as a treating ability and treating rate. Consequently, as the porous supporter, a porous material made of PTFE, which has excellent mechanical strength, chemical resistance, and heat resistance, is advantageously used. In addition, it is desired that the porous supporter not only have a pore diameter larger than that of the porous PTFE membrane to be combined with it but also have high porosity. More specifically, a porous supporter is advantageously used that is a porous material made of PTFE produced by stretching a PTFE membrane in such a way as to form pores of 100 nm or more, desirably 200 nm or more, and that has a thickness capable of giving sufficient mechanical strength.

It is desirable that the bonding of the multilayered nonporous PTFE membrane with the porous supporter be performed by placing at the porous supporter side the nonporous resin layer obtained by using PTFE having a small quantity of heat of fusion. However, methods including the following methods may be employed: a method performed in such a way that the nonporous resin layer obtained by using PTFE having a large quantity of heat of fusion is placed at the porous supporter side, and a method in which the multilayered nonporous PTFE membrane is sandwiched between two porous supporters and bonded with the supporters. The bonding may be performed by using, as an adhesive, a thermoplastic resin having a melting point lower than that of PTFE, such as perfluoroalkoxy fluororesin (PFA).

The invention stated in claim 4 is a process of producing a porous-PTFE-membrane composite. The process has the following steps:

a step 1 of forming a nonporous fluororesin membrane by casting, onto a smooth foil, a fluororesin dispersion produced through dispersing, into a dispersion medium, a powder of fluororesin consisting mainly of PTFE, subsequently by evaporating the dispersion medium, and then by performing heating to the melting point of the fluororesin or above to perform baking;

a step 2 of forming another nonporous fluororesin membrane by casting, onto the nonporous fluororesin membrane formed in the step 1, a fluororesin dispersion produced through dispersing, into a dispersion medium, a powder of fluororesin consisting mainly of PTFE having a different quantity of heat of fusion from that of the PTFE used in the step 1, subsequently by evaporating the dispersion medium, and then by performing heating to the melting point of the fluororesin or above to perform baking;

a step 3 of bonding a porous supporter with the nonporous fluororesin membrane at the outermost layer, the step 3 being performed after repeating the step 2 as necessary;

a step 4 of removing the smooth foil to obtain a composite having a multilayered nonporous fluororesin membrane, the step 4 being performed after the step 3; and

a step 5 of stretching the composite, the step 5 being performed after the step 4.

The step 1 is a step of forming a nonporous fluororesin membrane bonded with a smooth foil by casting a fluororesin dispersion onto the smooth foil and then by performing evaporating and baking operations. The process can remarkably suppress the formation of defects such as voids in the nonporous fluororesin membrane. In addition, the employing of this casting process can produce a homogeneous porous fluororesin membrane because the membrane is free from orientation, is isotropic, and is homogeneous and because the membrane does not shrink or deform at the time of the stretching.

The step 2 is a step of performing an operation similar to that in the step 1 on the nonporous fluororesin membrane obtained in the step 1, in place of performing the operation on the smooth foil. However, the PTFE contained in the fluororesin dispersion has a different quantity of heat of fusion from that of the PTFE used in the step 1.

The step 2 is repeated twice or more as necessary. In this case, the quantity of heat of fusion of the PTFE used in each of the steps is different from each other. Every time the steps 1 and 2 are repeated, the step is performed such that the quantity of heat of fusion is increased or decreased. By performing the step 2 or by repeating the step 2, a laminated body is produced in which a multilayered nonporous fluororesin membrane is formed on a smooth foil.

The step 3 is a step of bonding a porous supporter with the nonporous fluororesin membrane at the outermost later of the laminated body in which a multilayered nonporous fluororesin membrane is formed on a smooth foil. As described above, as the porous supporter, a porous material made of PTFE produced by stretching PTFE is advantageously used. As described above, this bonding operation may be performed by using, as an adhesive, a thermoplastic resin having a melting point lower than that of PTFE, such as PFA.

After the fluororesin membrane of the present invention is formed as described above, the step 4 is performed that removes the smooth foil covering the membrane. Although the removing method is not particularly limited, when a metal foil is used as the smooth foil, a method that removes it by dissolving it with an acid or the like can be shown as an example.

By removing the smooth foil, a composite (a laminated body) having, on the porous supporter, a multilayered nonporous fluororesin membrane is obtained that is formed by PTFEs each having a different quantity of heat of fusion from each other. The step 5 is a step of stretching the laminated body through a method similar to that described before. In addition, as described above, the annealing before the stretching can saturate the crystallinity of the fluororesin before the stretching. As a result, high porosity can be achieved and the production becomes possible at a higher reproducibility in pore diameter, which is desirable.

The invention stated in claim 5 is the process of producing the porous-PTFE-membrane composite as defined by claim 4, wherein the above-described smooth foil is a metal foil. As the smooth foil, it is desirable to use a metal foil, which has flexibility and is easy to remove by dissolving it with an acid or the like after the formation of the membrane. Among metal foils, an aluminum foil is particularly suitable in terms of flexibility, easiness in removal by dissolution, and availability.

The invention stated in claim 6 is a separation membrane element, incorporating, as a separation membrane, the porous-PTFE-membrane composite as defined by claim 3, which is placed in such a way that a larger-pore-diameter side of a porous PTFE membrane forming the porous-PTFE-membrane composite is positioned at an upstream side of a stream.

The porous-PTFE-membrane composite stated in claim 3 is advantageously used as a separation membrane (a filter). The separation membrane element that has the foregoing composite as a filter can perform at high efficiency the filtration of a treatment-undergoing liquid (raw water to be filtration-treated) containing microscopic particles. The porous PTFE membrane included in the composite is produced by stretching a multilayered nonporous resin membrane obtained by using PTFEs each having a different quantity of heat of fusion from each other. The porous PTFE membrane has different pore diameters in the direction of the thickness of it. When the composite is used as a filter, by positioning a larger-pore-diameter side at the upstream side of the stream of the treatment-undergoing liquid, the clogging caused by comparatively large particles in the treatment-undergoing liquid is decreased, so that the decreasing in the treating rate over time can be suppressed, which is desirable.

Advantageous Effects of Invention

The porous PTFE membrane of the present invention is composed of a fluororesin membrane consisting mainly of PTFE, which is excellent in chemical resistance, heat resistance, and mechanical strength, and has through pores having a microscopic and uniform diameter of 50 nm or less, so that the membrane is less likely to develop clogging when used as a filter. In addition, the membrane has a higher porosity even when the pore diameter is the same as that of the conventional porous PTFE membrane and consequently has excellent efficiency in filtering treatment.

The porous-PTFE-membrane composite of the present invention produced by combining the above-described porous PTFE membrane with a porous supporter has not only the above-described excellent properties but also superior mechanical strength, so that the composite is easy to handle at the time of use.

The above-described porous-PTFE-membrane composite can be produced by the process of the present invention for producing the porous-PTFE-membrane composite.

The separation membrane element of the present invention incorporating the porous-PTFE-membrane composite of the present invention as a filtering membrane (a filter) is used for filtering a treatment-undergoing liquid containing microscopic particles of about 50 nm or less in diameter. The element can achieve high treating efficiency and is low in a clogging-caused decrease in treating efficiency over time.

Brief Description of Drawings

Figure 1 is an SEM photograph of the porous-PTFE-membrane composite obtained in Comparative example 1.
Figure 2 is an SEM photograph of the porous-PTFE-membrane composite obtained in Comparative example 2.
Figure 3 is an SEM photograph of the porous-PTFE-membrane composite obtained in Example.

Description of Embodiments

Next, an explanation is given to concrete embodiments of the present invention. The present invention is not limited to the embodiments described below.

To produce the porous PTFE membrane of the present invention, multiple types of PTFE each having a different quantity of heat of fusion are used. The quantity of heat of fusion can be controlled through a method such as the adjusting of the molecular weight of the PTFE or the modifying of the PTFE by partially polymerizing hexafluoropropylene (hereinafter referred to as HFP), fluoroalkylvinyl ether (hereinafter referred to as FVE), or the like. When the molecular weight is decreased, the quantity of heat of fusion is increased. Inversely, when the molecular weight is increased, the quantity of heat of fusion is decreased. Furthermore, the modification, also, decreases the quantity of heat of fusion.

The adjusting of the molecular weight of PTFE is usually carried out by adjusting the condition for the polymerization of the material. The adjusting, however, may be performed by irradiating the material or formed product with ionizing radiation as stated in the published Japanese patent application Tokukai 2007-077323. The modification of PTFE is usually carried out at the time of polymerization, and the performing of the modification can decrease the quantity of heat of fusion.

It is desirable that the PTFE to be used as the material be selected from the PTFEs having a quantity of heat of fusion in the range of 17 to 60 J/g. The quantity of heat of fusion can be measured by using a heat-flux differential scanning calorimeter (for example, Heat-flux differential scanning calorimeter DSC-50 made by Shimadzu Seisakusho, Ltd.) . More specifically, the measurement is performed through the method described below.

A sample of 10 to 20 mg is heated from room temperature to 245°C at a rate of 50 °C/min and subsequently to 365°C at a rate of 10 °C/min (a first step). Then, it is cooled to 350°C at a rate of -10 °C/min and is maintained for 5 minutes at 350°C. Subsequently, it is cooled from 350°C to 330°C at a rate of -10 °C/min and from 330°C to 305°C at a rate of -1 °C/min (a second step). Next, after being cooled from 305°C to 245°C at a rate of -50 °C/min, it is heated from 245°C to 365°C at a rate of 10 °C/min (a third step). The sampling time is 0.5 seconds for each sampling. The amount of absorbed heat in the first step is obtained by integrating the section from 303°C to 353°C. The amount of generated heat in the second step is obtained by integrating the section from 318°C to 309°C. The amount of absorbed heat in the third step is obtained by integrating the section from 296°C to 343°C (or the section of 47°C starting from the end point of the endothermic curve). The amount of absorbed heat in the third step is defined as the quantity of heat of fusion.

The membrane of the fluororesin consisting mainly of PTFE can be produced through processes shown below.

(1) This process is performed as described below. First, a powder (a PTFE fine powder) is produced by emulsion polymerization of tetrafluoroethylene. After an extrusion aid is added to the powder, the powder is paste-extruded in the form of a sheet or tube and subsequently rolled as necessary. This process can decrease the thickness of the membrane (the formed product) to 20 μm or so. To form a structure in which nonporous PTFE membranes each having a different quantity of heat of fusion are laminated, the following processes may be employed, for example: a process in which at least two types of membranes (formed products) obtained as described above are laminated and then heated to their melting point or above to be unified, and a process in which a forming machine is used that can paste-extrude at least two types of membranes (formed products) in a unified form.

(2) This process is performed as described below. First, a powder (a PTFE molding powder) is produced by suspension polymerization of tetrafluoroethylene. The powder is formed into the shape of a hollow cylinder by compression forming. The hollow-cylindrical product is heated to its melting point or above and, while being rotated, is cut to produce a thin film of 20 μm or so. To form a structure in which nonporous PTFE membranes each having a different quantity of heat of fusion are laminated, for example, a process may be employed in which at least two types of membranes (formed products) obtained as described above are laminated and then heated to their melting point or above to be unified.

(3) PTFE dispersions each having a different quantity of heat of fusion are produced by emulsion polymerization or the like of tetrafluoroethylene. By using the dispersions and by employing the process stated in claim 4, a multilayered membrane can be produced that has a structure in which nonporous PTFE membranes each having a different quantity of heat of fusion are laminated. It is desirable to use the process stated in the Japanese patent 4371176 as the above-described process because the thickness of the individual layers can be 5 μm or less and when the membrane is used as a filtering membrane, the filtering rate and treating efficiency can be further increased.

The fluororesin dispersion used in the process stated in claim 4 is a product formed by dispersing in a dispersion medium a fluororesin powder consisting mainly of PTFE. As described above, the dispersion can be produced by emulsion polymerization of tetrafluoroethylene. The types of fluororesin that may be dispersed in the dispersion medium together with PTFE include a powder of thermoplastic fluororesin such as PFA.

As the dispersion medium, an aqueous-based medium such as water is usually used. It is desirable that the content of fluororesin powder in the fluororesin dispersion fall within the range of 20 to 70 wt%. It is desirable that the fluororesin dispersion further contain a nonionic water-soluble polymer having a molecular weight of 10,000 or more because without affecting the dispersing of the fluororesin dispersion, the polymer gelates at the time of the evaporation of the water to form a film, so that a thin fluororesin membrane having fewer defects can be obtained. The types of nonionic water-soluble polymer having a molecular weight of 10,000 or more include polyethylene oxide and polyvinyl alcohol.

It is desirable that the PTFE to be used in the fluororesin dispersion have a molecular weight of 500,000 to 20,000,000, more desirably 500,000 to 10,000,000, preferably 500,000 to 5,000,000. If the molecular weight is excessively high, the porosity tends to decrease. If the molecular weight is excessively low, pin holes tend to develop and the membrane tends to easily break at the time of stretching.

The smooth foil to be used in the process stated in claim 4 is a smooth film having no observable pit or asperity at the surface to be brought into contact with the fluororesin dispersion. Although the range of the thickness of the smooth foil is not particularly limited, it is desirable that the thickness be such that it can give flexibility so that the operation can be performed easily that places the foil onto the fluororesin dispersion coated on the base material without permitting the formation of air bubbles. Furthermore, it is desirable that the thickness be such that when the smooth foil is removed after the membrane is formed, the thickness does not render the removal difficult. For example, when the smooth foil is removed through dissolution, it is desired that the thickness be such that it facilitates the removal through dissolution.

The types of the method of casting in the process stated in claim 4 include a method that simply coats the fluororesin dispersion onto a smooth foil. After the casting, the dispersion medium is evaporated. The evaporation can be carried out by performing heating either to a temperature close to the boiling point of the dispersion medium or to the boiling point or above. This evaporation forms a film composed of the fluororesin powder consisting mainly of PTFE. By heating the film to the melting point of the fluororesin or above to perform baking, a nonporous fluororesin membrane can be obtained. The heating for evaporation and baking may be conducted in the same stage.

The stretching of the composite having the multilayered nonporous fluororesin membrane can be carried out by using the apparatus that is used when the conventional stretched PTFE is produced and under the condition similar to that for the foregoing PTFE. It is desirable that the stretching temperature be 200°C or less, which is lower than the melting point of fluororesin, more desirably 160°C or less, preferably 100°C or less. When the casting process is employed for the formation of the fluororesin membrane, the membrane is free from orientation, is isotropic, and is homogeneous. In addition, the membrane does not shrink or deform at the time of the stretching. As a result, a homogeneous porous fluororesin membrane can be obtained.

Examples

First, description is made on the method for measuring the quantity of heat of fusion, air permeability (Gurley second), and mean flow diameter in Example and Comparative examples.

Method for measuring the quantity of heat of fusion

The measurement is conducted by using a heat-flux differential scanning calorimeter (Heat-flux differential scanning calorimeter DSC-50, made by Shimadzu Seisakusho, Ltd.) and through the method described below.

A sample of 10 to 20 mg is heated from room temperature to 245°C at a rate of 50 °C/min and subsequently to 365°C at a rate of 10 °C/min (a first step). Then, it is cooled to 350°C at a rate of -10 °C/min and is maintained for 5 minutes at 350°C. Subsequently, it is cooled from 350°C to 330°C at a rate of -10 °C/min and from 330°C to 305°C at a rate of -1 °C/min (a second step). Next, after being cooled from 305°C to 245°C at a rate of -50 °C/min, it is heated from 245°C to 365°C at a rate of 10 °C/min (a third step). The sampling time is 0.5 seconds for each sampling. The amount of absorbed heat in the first step is obtained by integrating the section from 303°C to 353°C. The amount of generated heat in the second step is obtained by integrating the section from 318°C to 309°C. The amount of absorbed heat in the third step is obtained by integrating the section from 296°C to 343°C (or the section of 47°C starting from the end point of the endothermic curve). The amount of absorbed heat in the third step is defined as the quantity of heat of fusion.

Method for measuring the air permeability (Gurley second)

The measurement was performed by using an Oken-type air-permeability measuring device (made by Asahi Seiko Co., Ltd.) having the same structure as that of the Gurley air permeability tester stipulated in JIS P 8117 (Air permeability test method for paper and paperboard). The test result is shown by Gurley second.

Method for measuring the mean flow diameter

The measurement was performed by using a micropore distribution measuring instrument (Palm Porometer CFP-1500A made by Porous Materials, Inc.) and by using GALWICK (propylene, 1,1,2,3,3,3-oxidized hexahydrofluoric acid made by Porous Materials, Inc.) as a liquid. More specifically, the diameter can be obtained through the following method. First, the relationship between the pressure difference applied to the membrane and the rate of air flow passing through the membrane is measured both in the case where the membrane is dry and in the case where the membrane is wet with the liquid. The obtained two graphs are defined as a dry curve and a wet curve, respectively. The pressure difference at the intersection point of the wet curve and the curve drawn by halving the flow rate in the dry curve is denoted as P (Pa). The mean flow diameter is obtained by the following equation:

$$\text{Mean flow diameter d }(\mu m) = c\gamma/P,$$

where c is a constant of 2,860 and
γ is a surface tension of the liquid (dynes/cm).

Comparative example 1

Preparation of dispersion 1

The following three materials were used:

PTFE dispersion 34JR (made by Du Pont-Mitsui Fluorochemicals Company, Ltd.) having a quantity of heat of fusion of 54 J/g;
MFA latex (a low-melting-point-PFA latex; solid content: 55 mass%; made by Solvay Solexis S.p.a.); and
PFA dispersion 920HP (solid content: 60 mass%; made by Du Pont-Mitsui Fluorochemicals Company, Ltd.).

By using the foregoing materials, a fluororesin dispersion was prepared in which MFA/ (PTFE + MFA + PFA) (volume ratio) was 2% and PFA/ (PTFE + MFA + PFA) (volume ratio) was 2%. Finally, a fluororesin dispersion 1 was prepared by adding to the foregoing fluororesin dispersion a polyethylene oxide having a molecular weight of two million in such a way that its content became 3 mg/ml and polyoxyethylene alkyl ether sulfate ester triethanolamine (an anti-friction material for preventing scratches caused by the friction between the slide shaft and the foil; made by Kao Corporation; 20T) in such a way that its content became 10 mg/ml.

Production of test sample

An aluminum foil having a thickness of 50 μm was spread on a flat glass plate such that wrinkles were not formed, and the foil was fixed to the plate. After the fluororesin dispersion 1 was dropped, the fluororesin dispersion 1 was uniformly spread across the surface of the aluminum foil by moving a stainless-steel slide shaft (trade name: Stainless fine shaft SNSF-type; outer diameter: 20 mm) made by Nippon Bearing Co., Ltd. in such a way as to slide it (casting).
After the foil was subjected to the steps of drying for one hour at 80°C, heating for one hour at 250°C, and heating for one hour at 340°C in this order, it was cooled by itself to form a fluororesin membrane (a nonporous fluororesin membrane consisting mainly of PTFE) fixed on the aluminum foil. The foregoing fluororesin membrane had an average thickness of about 3 μm, which was calculated by using both the absolute specific gravity of fluororesin (2.25 g/cm³) and the difference in weight of aluminum foil per unit area between the aluminum foil before the fluororesin membrane was formed and the aluminum foil after the fluororesin membrane was formed.
Subsequently, to a PFA dispersion produced by diluting PFA dispersion 920HP by using distilled water so as to increase the volume fourfold, polyethylene oxide having a molecular weight of two million was added in such a way that its content became 3 mg/ml and polyoxyethylene alkyl ether sulfate ester triethanolamine (made by Kao Corporation; 20T) was added in such a way that its content became 10 mg/ml to prepare a PFA dispersion A of fourfold dilution.
The fluororesin membrane fixed on the aluminum foil was spread on a flat glass plate such that wrinkles were not formed, and the membrane was fixed to the plate. After the PFA dispersion A was dropped, the PFA dispersion A was uniformly spread across the surface of the aluminum foil by moving the same stainless-steel slide shaft made by Nippon Bearing Co., Ltd. as that of the above description in such a way as to slide it. During the spreading operation, while the water still remains, a stretched-PTFE porous material having a pore diameter of 0.45 μm and a thickness of 80 μm (made by Sumitomo Electric Fine Polymer, Inc.; trade name: POREFLON FP-045-80) (IPA-BP: 150 kPa; porosity: 70%; Gurley second: 9.1 seconds) was placed on the dispersion A to cover it.
Subsequently, after the foregoing product was subjected to the steps of drying for one hour at 80°C, heating for one hour at 250°C, heating for one hour at 320°C, and heating for 12 hours at 317.5°C (an annealing process) in this order, it was cooled by itself to form a composite in which the stretched-PTFE porous material was bonded, through the thermoplastic PFA having a melting point lower than that of PTFE, with the nonporous fluororesin membrane, consisting mainly of PTFE, on which the aluminum foil was fixed. Then, the aluminum foil was removed by dissolving it with hydrochloric acid to obtain a test sample 1 (a laminated body of the nonporous PTFE membrane).
The test sample 1 had a Gurley second of 5,000 seconds or more. When ethanol was brought into contact with the PTFE membrane at room temperature, there existed no pores that allowed the penetration of it. This test showed that the test sample 1 was a laminated body having a nonporous PTFE membrane (a nonporous fluororesin membrane consisting mainly of PTFE) that prevents ethanol from penetrating it.

Stretching

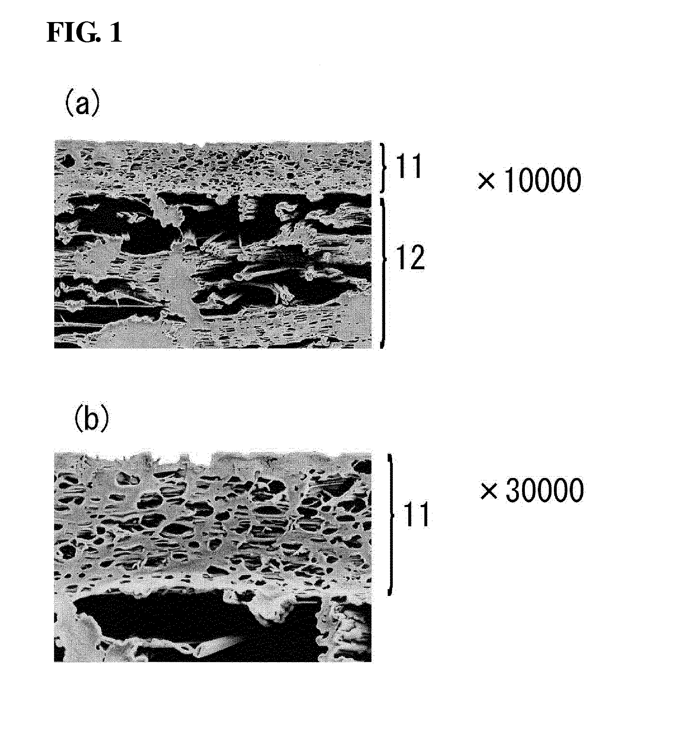

Subsequently, by using a tensile tester, the test sample 1 was stretched in the direction of the width at a temperature of 60°C, a chuck distance of 55 mm, and a stroke of 165 mm (degree of stretching: 200%). Then, by using the same tensile tester, the test sample 1 was further stretched in a direction perpendicular to the direction of the width at a temperature of 25°C, a chuck distance of 55 mm, and a stroke of 88 mm (degree of stretching: 60%) to obtain a porous-PTFE-membrane composite 1. The porous-PTFE-membrane composite 1 had a Gurley second of 18 seconds and a mean flow pore diameter of 0.061 $\mu$m. Figure 1 shows an SEM photograph of a cross section of the porous-PTFE-membrane composite 1 obtained. Figure 1 (a) is an SEM photograph of 10,000 times, in which "11" denotes the porous PTFE membrane and "12" denotes the porous supporter. Figure 1 (b) is an SEM photograph of 30,000 times showing a cross section of the porous PTFE membrane 11.

Comparative example 2

Preparation of dispersion 2

A modified-PTFE dispersion (which has $-CF_3$ absorption by FT-IR; HFP-modified type) having a quantity of heat of fusion of 36 J/g, MFA latex, and PFA dispersion 920HP were used to prepare a fluororesin dispersion in which MFA/ (PTFE + MFA + PFA) (volume ratio) was 2% and PFA/ (PTFE + MFA + PFA) (volume ratio) was 2%. Furthermore, a fluororesin dispersion 2 was prepared by adding to the foregoing fluororesin dispersion a polyethylene oxide having a molecular weight of two million in such a way that its content became 3 mg/ml and polyoxyethylene alkyl ether sulfate ester triethanolamine (made by Kao Corporation; 20T) in such a way that its content became 10 mg/ml.

Production of test sample

An aluminum foil having a thickness of 50 $\mu$m was spread on a flat glass plate such that wrinkles were not formed, and the foil was fixed to the plate. After the fluororesin dispersion 2 was dropped, the fluororesin dispersion 2 was uniformly spread across the surface of the aluminum foil by moving a stainless-steel slide shaft (trade name: Stainless fine shaft SNSF-type; outer diameter: 20 mm) made by Nippon Bearing Co., Ltd. in such a way as to slide it.

After the foil was subjected to the steps of drying for one hour at 80°C, heating for one hour at 250°C, and heating for one hour at 340°C in this order, it was cooled by itself to form a fluororesin membrane (a nonporous fluororesin membrane consisting mainly of PTFE) fixed on the aluminum foil. The foregoing fluororesin membrane had an average thickness of about 3 $\mu$m, which was calculated by using both the absolute specific gravity of fluororesin (2.25 g/cm$^3$) and the difference in weight of aluminum foil per unit area between the aluminum foil before the fluororesin membrane was formed and the aluminum foil after the fluororesin membrane was formed.

The fluororesin membrane fixed on the aluminum foil was spread on a flat glass plate such that wrinkles were not formed, and the membrane was fixed to the plate. The PFA dispersion A of fourfold dilution prepared similarly to the case of Comparative example 1 was dropped. Then, the PFA dispersion A was uniformly spread across the surface of the aluminum foil by moving the same stainless-steel slide shaft made by Nippon Bearing Co., Ltd. as that of the above description in such a way as to slide it. During the spreading operation, while the water still remains, a stretched-PTFE porous material having a pore diameter of 0.45 $\mu$m and a thickness of 80 $\mu$m (made by Sumitomo Electric Fine Polymer, Inc.; trade name: POREFLON FP-045-80) (IPA-BP: 150 kPa; porosity: 70%; Gurley second: 9.1 seconds) was placed on the dispersion A to cover it. Subsequently, after the foregoing product was subjected to the steps of drying for one hour at 80°C, heating for one hour at 250°C, heating for one hour at 320°C, and heating for 12 hours at 317.5°C in this order, it was cooled by itself to form a composite in which the stretched-PTFE porous material was bonded, through the thermoplastic PFA having a melting point lower than that of PTFE, with the nonporous fluororesin membrane, consisting mainly of PTFE, on which the aluminum foil was fixed. Then, the aluminum foil was removed by dissolving it with hydrochloric acid to obtain a test sample 2 (a laminated body of the nonporous PTFE membrane).

The test sample 2 had a Gurley second of 5,000 seconds or more. When isopropanol was brought into contact with the PTFE membrane at room temperature, there existed no pores that allowed the penetration of it. This test showed that the test sample 2 was a laminated body having a nonporous PTFE membrane (a nonporous fluororesin membrane consisting mainly of PTFE) that prevents isopropanol from penetrating it.

Stretching

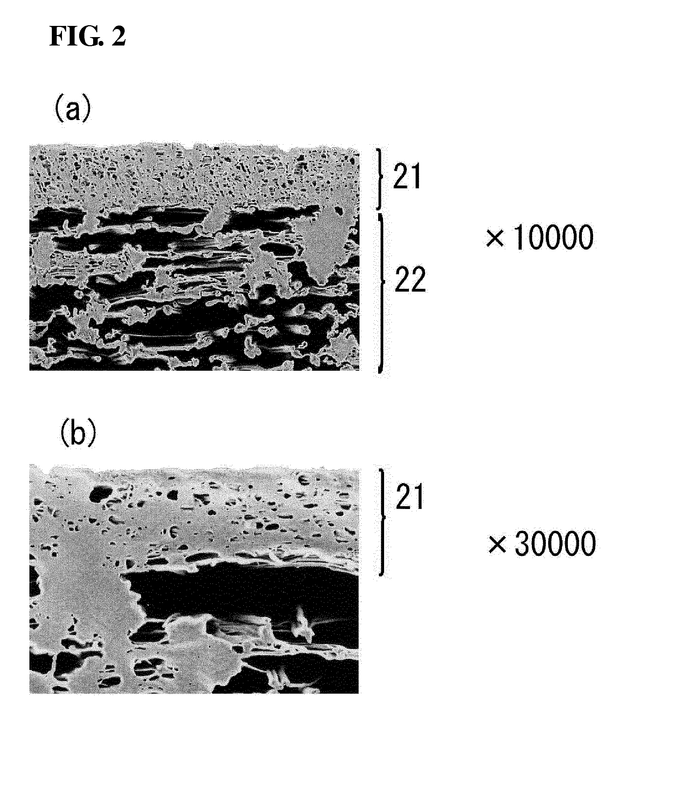

Subsequently, under the same condition as that in Comparative example 1, the test sample 2 was stretched in the direction of the width and in a direction perpendicular to the direction of the width to obtain a porous-PTFE-membrane composite 2. The porous-PTFE-membrane composite 2 had a Gurley second of 80 seconds and a mean flow pore diameter of 0.028 $\mu$m. Figure 2 shows an SEM photograph of a cross section of the porous-PTFE-membrane composite 2 obtained. Figure 2 (a) is an SEM photograph of 10,000 times, in which "21" denotes the porous PTFE membrane and "22" denotes the porous supporter. Figure 2 (b) is an SEM photograph of 30,000 times showing a cross section of the porous PTFE membrane 21.

Example

Production of test sample

An aluminum foil having a thickness of 50 $\mu$m was spread on a flat glass plate such that wrinkles were not formed, and the foil was fixed to the plate. After a prepared product of the same fluororesin dispersion 1 as that used in Comparative example 1 was dropped, the fluororesin dispersion 1 was uniformly spread across the surface of the aluminum foil by moving a stainless-steel slide shaft (trade name: Stainless fine shaft SNSF-type; outer diameter: 20 mm) made by Nippon Bearing Co., Ltd. in such a way as to slide it.

After the foil was subjected to the steps of drying for one hour at 80°C, heating for one hour at 250°C, and heating for one hour at 340°C, it was cooled by itself to form a fluororesin membrane (a nonporous fluororesin membrane consisting mainly of PTFE) fixed on the aluminum foil. The foregoing fluororesin membrane had an average thickness of about 3 $\mu$m, which was calculated by using both the absolute specific gravity of fluororesin (2.25 g/cm$^3$) and the difference in weight of aluminum foil per unit area between the aluminum foil before the fluororesin membrane was formed and the aluminum foil after the fluororesin membrane was formed.

The fluororesin membrane fixed on the aluminum foil was spread on a flat glass plate such that wrinkles were not formed, and the membrane was fixed to the plate. After a prepared product of the same fluororesin dispersion 2 as that used in Comparative example 2 was dropped, the fluororesin dispersion 2 was uniformly spread across the surface of the aluminum foil by moving a stainless-steel slide shaft (trade name: Stainless fine shaft SNSF-type; outer diameter: 20 mm) made by Nippon Bearing Co., Ltd. in such a way as to slide it.

After the foil was subjected to the steps of drying for one hour at 80°C, heating for one hour at 250°C, and heating for one hour at 340°C, it was cooled by itself to form a fluororesin membrane (a nonporous fluororesin membrane consisting mainly of PTFE) fixed on the aluminum foil. The foregoing fluororesin membrane had an average thickness of about 6 $\mu$m, which was calculated by using both the absolute specific gravity of fluororesin (2.25 g/cm$^3$) and the difference in weight of aluminum foil per unit area between the aluminum foil before the fluororesin membrane was formed and the aluminum foil after the fluororesin membrane was formed.

The fluororesin membrane fixed on the aluminum foil was spread on a flat glass plate such that wrinkles were not formed, and the membrane was fixed to the plate. The PFA dispersion A of fourfold dilution prepared similarly to the case of Comparative example 1 was dropped. Then, the PFA dispersion A was uniformly spread across the surface of the aluminum foil by moving the same stainless-steel slide shaft made by Nippon Bearing Co., Ltd. as that of the above description in such a way as to slide it. During the spreading operation, while the water still remains, a stretched-PTFE porous material having a pore diameter of 0.45 $\mu$m and a thickness of 80 $\mu$m (made by Sumitomo Electric Fine Polymer, Inc.; trade name: POREFLON FP-045-80) was placed on the dispersion A to cover it. Subsequently, after the foregoing product was subjected to the steps of drying for one hour at 80°C, heating for one hour at 250°C, heating for one hour at 320°C, and heating for 12 hours at 317.5°C in this order, it was cooled by itself to form a composite in which the stretched-PTFE porous material was bonded, through the thermoplastic PFA having a melting point lower than that of PTFE, with the nonporous fluororesin membrane, consisting mainly of PTFE, on which the aluminum foil was fixed. Then, the aluminum foil was removed by dissolving it with hydrochloric acid to obtain a test sample 3 (a laminated body of the nonporous PTFE membrane).

The test sample 3 had a Gurley second of 5,000 seconds or more. When ethanol was brought into contact with the PTFE membrane at room temperature, there existed no pores that allowed the penetration of it. This test showed that the test sample 3 was a laminated body having a nonporous PTFE membrane (a nonporous fluororesin membrane consisting mainly of PTFE) that prevents ethanol from penetrating it.

Stretching

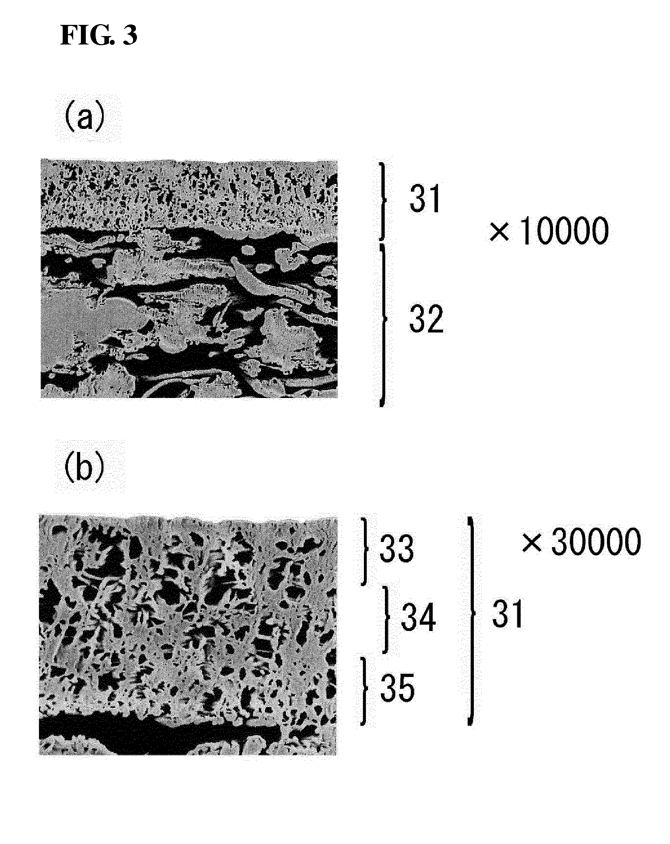

Subsequently, under the same condition as that in Comparative example 1, the test sample 3 was stretched in the direction of the width and in a direction perpendicular to the direction of the width to obtain a porous-PTFE-membrane composite 3. The porous-PTFE-membrane composite 3 had a Gurley second of 55 seconds and a mean flow pore diameter of 0.030 $\mu$m. Figure 3 shows an SEM photograph of a cross section of the porous-PTFE-membrane composite 3 obtained. Figure 3 (a) is an SEM photograph of 10,000 times, in which "31" denotes the porous PTFE membrane and "32" denotes the porous supporter. Figure 3 (b) is an SEM photograph of 30,000 times showing a cross section of the porous PTFE membrane 31, in which "33" denotes a large-pore-diameter layer, "34" denotes a pore-diameter transition layer, and "35" denotes a small-pore-diameter layer. As can be seen in Fig. 3, from the porous supporter 32 side, the small-pore-diameter layer 35, the pore-diameter transition layer 34, and the large-pore-diameter layer 33 are formed in this order, this configuration showing that the pore diameter increases continuously in the direction of the thickness.

The results of Comparative examples 1 and 2 have revealed that even both the crystallization condition (annealing) and the stretching condition are the same, a porous PTFE membrane (a composite) obtained by using PTFE having a small quantity of heat of fusion has a small pore diameter (mean flow pore diameter) and a porous PTFE membrane (a composite) obtained by using PTFE having a large quantity of heat of fusion has a large pore diameter (mean flow pore diameter).

In Example, the porous PTFE membrane formed under the same condition as that in Comparative example 1 and the porous PTFE membrane formed under the same condition as that in Comparative example 2 are bonded together. Therefore, a multilayered porous resin membrane having different pore diameters (mean flow pore diameters) in the direction of the thickness of it is formed on the stretched-PTFE porous material (porous supporter). The pore diameter (mean flow pore diameter) of the porous-PTFE-membrane composite obtained in Example is far smaller than that in the case of Comparative example 1 and nearly the same as that in Comparative example 2. However, the air permeability (Gurley second) in Example is far smaller than that in Comparative example 2. In other words, the obtained results show that even the pore diameter (mean flow pore diameter) is nearly the same as that of the conventional porous-resin-membrane composite, the porous-PTFE-membrane composite of the present invention has a smaller Gurley second and therefore can achieve high porosity and excellent treating efficiency.

Reference Signs List

> 11, 21, and 31: Porous PTFE membrane
> 12, 22, and 32: Porous supporter
> 33: Large-pore-diameter layer
> 34: Pore-diameter transition layer
> 35: Small-pore-diameter layer

The invention will now be further described with reference to the following numbered clauses:

> 1. A porous polytetrafluoroethylene membrane, being a porous resin membrane produced by the steps of:
>
>> preparing multiple types of polytetrafluoroethylene each having a different quantity of heat of fusion;
>> using each of the multiple types of polytetrafluoroethylene to form a membrane composed of a fluororesin consisting mainly of polytetrafluoroethylene;
>> heating each membrane to its melting point or above to bake it, so that multiple types of nonporous resin membranes are produced;
>> stacking the multiple types of nonporous resin membranes in the order of the magnitude of the quantity of heat of fusion of the polytetrafluoroethylene used to produce each of the nonporous resin membranes;
>> bonding the stacked membranes with each other; and
>> stretching the bonded membranes to form the porous resin membrane;

the porous polytetrafluoroethylene membrane having a mean flow pore diameter of 50 nm or less.
2. The porous polytetrafluoroethylene membrane as defined by clause 1, wherein the multiple types of polytetrafluoroethylene have a difference of 10 J/g or more in quantity of heat of fusion between them.
3. A porous-polytetrafluoroethylene-membrane composite, comprising:

> the porous polytetrafluoroethylene membrane as defined by clause 1 or 2; and
> a porous supporter, which is bonded with the porous polytetrafluoroethylene membrane.

4. A process of producing a porous-polytetrafluoroethylene-membrane composite, the process comprising:

> a step 1 of forming a nonporous fluororesin membrane by casting, onto a smooth foil, a fluororesin dispersion produced through dispersing, into a dispersion medium, a powder of fluororesin consisting mainly of polytetrafluoroethylene, subsequently by evaporating the dispersion medium, and then by performing heating to the melting point of the fluororesin or above to perform baking;
> a step 2 of forming another nonporous fluororesin membrane by casting, onto the nonporous fluororesin membrane formed in the step 1, a fluororesin dispersion produced through dispersing, into a dispersion medium, a powder of fluororesin consisting mainly of polytetrafluoroethylene having a different quantity of heat of fusion from that of the polytetrafluoroethylene used in the step 1, subsequently by evaporating the dispersion medium, and then by performing heating to the melting point of the fluororesin or above to perform baking;
> a step 3 of bonding a porous supporter with the nonporous fluororesin membrane at the outermost layer, the step 3 being performed after repeating the step 2 as necessary;
> a step 4 of removing the smooth foil to obtain a composite having a multilayered nonporous fluororesin membrane, the step 4 being performed after the step 3; and
> a step 5 of stretching the composite, the step 5 being performed after the step 4.

5. The process of producing a porous-polytetrafluoroethylene-membrane composite as defined by clause 4, wherein the smooth foil is a metal foil.
6. A separation membrane element, comprising, as a separation membrane, the porous-polytetrafluoroethylene-membrane composite as defined by clause 3, which is placed in such a way that a larger-pore-diameter side of a porous polytetrafluoroethylene membrane forming the porous-polytetrafluoroethylene-membrane composite is positioned at an upstream side of a stream.

## Claims

1. A porous polytetrafluoroethylene membrane, being a porous resin membrane produced by the steps of:

    preparing multiple types of polytetrafluoroethylene each having a different quantity of heat of fusion;
    using each of the multiple types of polytetrafluoroethylene to form a membrane composed of a fluororesin consisting mainly of polytetrafluoroethylene;
    heating each membrane to its melting point or above to bake it, so that multiple types of nonporous resin membranes are produced;
    stacking the multiple types of nonporous resin membranes in the order of the magnitude of the quantity of heat of fusion of the polytetrafluoroethylene used to produce each of the nonporous resin membranes;
    bonding the stacked membranes with each other; and
    stretching the bonded membranes to form the porous resin membrane;

    the porous polytetrafluoroethylene membrane having a mean flow pore diameter of 50 nm or less.

2. The porous polytetrafluoroethylene membrane as defined by claim 1, wherein the multiple types of polytetrafluoroethylene have a difference of 10 J/g or more in quantity of heat of fusion between them.

3. A porous-polytetrafluoroethylene-membrane composite, comprising:

    the porous polytetrafluoroethylene membrane as defined by claim 1 or 2; and
    a porous supporter, which is bonded with the porous polytetrafluoroethylene membrane.

4. A separation membrane element, comprising, as a separation membrane, the porous-polytetrafluoroethylene-membrane composite as defined by claim 3, which is placed in such a way that a larger-pore-diameter side of a porous polytetrafluoroethylene membrane forming the porous-polytetrafluoroethylene-membrane composite is positioned at an upstream side of a stream.

# FIG. 1

(a)

11

×10000

12

(b)

11

×30000

## FIG. 2

(a)

21
22

×10000

(b)

21

×30000

**FIG. 3**

(a)

31

32

×10000

(b)

33

34

35

31

×30000

Europäisches
Patentamt

European
Patent Office

Office européen
des brevets

# EUROPEAN SEARCH REPORT

Application Number

EP 15 19 2187

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/240553 A1 (ISHIZUKA KENICHI [JP] ET AL) 6 October 2011 (2011-10-06) * paragraphs [0039], [0049], [0093], [0104] - [0107], [0102], [0121] - [0122], [0138] - [0143], [0145]; claims 1,7; figures 14-15; example 1 * | 1-4 | INV. B01D71/36 B01D63/08 B01D69/10 B01D69/12 C08J9/00 |
| E | EP 2 578 302 A1 (FUJIFILM CORP [JP]) 10 April 2013 (2013-04-10) * paragraph [0102]; claims 1,4,8-9,11 * | 1-4 | B01D67/00 B29K27/18 B29C55/02 B29D99/00 B29C39/02 |
| A | HOWARD W. STARKWEATHER ET AL: "The heat of fusion of polytetrafluoroethylene", JOURNAL OF POLYMER SCIENCE, PART B: POLYMER PHYSICS, vol. 20, no. 4, 1 April 1982 (1982-04-01), pages 751-761, XP055163814, ISSN: 0098-1273, DOI: 10.1002/pol.1982.180200416 * page 757, paragraph 2; table III * | 1-4 | |
| A | EP 2 067 814 A1 (SUMITOMO ELEC FINE POLYMER INC [JP]) 10 June 2009 (2009-06-10) * paragraphs [0029], [0057], [0058]; claims 7,14,19 * | 1-4 | TECHNICAL FIELDS SEARCHED (IPC) B01D |
| A | EP 2 033 704 A2 (FUJIFILM CORP [JP]) 11 March 2009 (2009-03-11) * the whole document * * family member of JP2009061363 A * | 1-4 | |
| A | EP 0 970 739 A1 (NITTO DENKO CORP [JP]) 12 January 2000 (2000-01-12) * the whole document * * Family member of JP2000079332 A * | 1-4 | |

-/--

The present search report has been drawn up for all claims

| Place of search | Date of completion of the search | Examiner |
|---|---|---|
| Munich | 5 February 2016 | Veríssimo, Sónia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**Europäisches Patentamt**
**European Patent Office**
**Office européen des brevets**

# EUROPEAN SEARCH REPORT

Application Number

EP 15 19 2187

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2008 055407 A (NITTO DENKO CORP) 13 March 2008 (2008-03-13) * abstract * ----- | 1-4 | |
| A | JP 2001 170424 A (NITTO DENKO CORP) 26 June 2001 (2001-06-26) * abstract * ----- | 1-4 | |

TECHNICAL FIELDS SEARCHED (IPC)

The present search report has been drawn up for all claims

| Place of search | Date of completion of the search | Examiner |
|---|---|---|
| Munich | 5 February 2016 | Veríssimo, Sónia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 19 2187

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2016

| Patent document cited in search report | | | Publication date | Patent family member(s) | | | Publication date |
|---|---|---|---|---|---|---|---|
| US 2011240553 | A1 | | 06-10-2011 | JP | 5470140 | B2 | 16-04-2014 |
| | | | | JP | 2011212607 | A | 27-10-2011 |
| | | | | US | 2011240553 | A1 | 06-10-2011 |
| EP 2578302 | A1 | | 10-04-2013 | EP | 2578302 | A1 | 10-04-2013 |
| | | | | JP | 2012011369 | A | 19-01-2012 |
| | | | | US | 2013087500 | A1 | 11-04-2013 |
| | | | | WO | 2011152145 | A1 | 08-12-2011 |
| EP 2067814 | A1 | | 10-06-2009 | CN | 101501113 | A | 05-08-2009 |
| | | | | CN | 102336993 | A | 01-02-2012 |
| | | | | EP | 2067814 | A1 | 10-06-2009 |
| | | | | EP | 2596853 | A1 | 29-05-2013 |
| | | | | JP | 4371176 | B2 | 25-11-2009 |
| | | | | JP | 5158522 | B2 | 06-03-2013 |
| | | | | JP | 2009179802 | A | 13-08-2009 |
| | | | | KR | 20090036124 | A | 13-04-2009 |
| | | | | KR | 20140089439 | A | 14-07-2014 |
| | | | | TW | 200829630 | A | 16-07-2008 |
| | | | | US | 2010203310 | A1 | 12-08-2010 |
| | | | | US | 2015069675 | A1 | 12-03-2015 |
| | | | | WO | 2008018400 | A1 | 14-02-2008 |
| EP 2033704 | A2 | | 11-03-2009 | CN | 101380548 | A | 11-03-2009 |
| | | | | EP | 2033704 | A2 | 11-03-2009 |
| | | | | JP | 5220369 | B2 | 26-06-2013 |
| | | | | JP | 2009061363 | A | 26-03-2009 |
| | | | | US | 2009061205 | A1 | 05-03-2009 |
| EP 0970739 | A1 | | 12-01-2000 | EP | 0970739 | A1 | 12-01-2000 |
| | | | | JP | 2000079332 | A | 21-03-2000 |
| | | | | US | 6214093 | B1 | 10-04-2001 |
| JP 2008055407 | A | | 13-03-2008 | NONE | | | |
| JP 2001170424 | A | | 26-06-2001 | NONE | | | |

EPO FORM P0459

For more details about this annex : see Official Journal of the European Patent Office, No. 12/82

## REFERENCES CITED IN THE DESCRIPTION

**Patent documents cited in the description**

- JP 5040425 A
- JP 2007077323 A
- JP 4371176 B